# EUROPEAN PATENT APPLICATION

(11) **EP 2 523 306 A1**
(43) Date of publication of application: **14.11.2012**
(21) Application number: 11741850.9
(22) Date of filing: 21.01.2011
(51) Int. Cl.: H02J 9/00

(54) **METHOD, DEVICE AND SYSTEM FOR SUPPLYING POWER FROM STORAGE BATTERY**

(30) Priority: 10.02.2010 CN 201010111252
(71) Applicant: Huawei Technologies Co., Ltd., Shenzhen, Guangdong 518129 (CN)
(72) Inventor: YE, Jianshe, Shenzhen Guangdong 518129 (CN); LE, Bin, Shenzhen Guangdong 518129 (CN); MO, Yuanbo, Shenzhen Guangdong 518129 (CN); PENG, Junke, Shenzhen Guangdong 518129 (CN)
(74) Representative: Kreuz, Georg Maria
(86) International application number: PCT/CN2011/070462
(87) International publication number: WO 2011/097979

(57) **Abstract**

Embodiments of the present invention disclose a method, a device, and a system for supplying power from batteries. The method for supplying power from batteries includes: detecting a power supply state of a cycling battery in a system, where the system firstly uses the cycling battery to supply power to a load; and when a voltage of the cycling battery drops to a voltage threshold, activating a standby battery to supply power to the load. The embodiments of the present invention can implement mixed use of different types of batteries.

## Description

### FIELD OF THE INVENTION

The present invention relates to the field of communication technologies, and in particular, to a method, a device, and a system for supplying power from batteries.

### BACKGROUND OF THE INVENTION

With the rapid development of the mobile communication scale, the number of unattended outdoor base stations is increasing. Because most of the outdoor base stations are generally located in remote areas, the mains supply conditions are adverse or even no mains supply is available for the base stations. A majority of communication base stations without mains supply in the current network use double oil engines for supplying power in turn. As new power supply solutions with low cost and low oil consumption emerge, a large number of communication base stations require optimization and reengineering.

During the actual reengineering of the base stations, because new and old batteries or different types of batteries have different internal resistance, these batteries cannot be mixed in use. The general conventional way for dealing with this problem is: directly throwing away the original lead acid batteries of the base stations and replacing these batteries with new batteries, or lithium iron batteries with long life and deep cycle. However, throwing away the old lead acid batteries everywhere causes serious environment pollution and a waste of money; in addition, the cycle life of the conventional maintenance-free lead acid batteries is not enough, which is disadvantageous to long-time cyclic applications under an adverse outdoor environment, and tends to form a vicious cycle: the batteries fail soon - the old batteries are thrown away and replaced with new battery sets - the new batteries fail soon; and currently, it is difficult to configure lithium iron batteries with large capacity, it is difficult for the battery capacity to meet the backup power requirements of the base stations, and the price is high, so that a large-capacity configuration greatly increases the cost of the system.

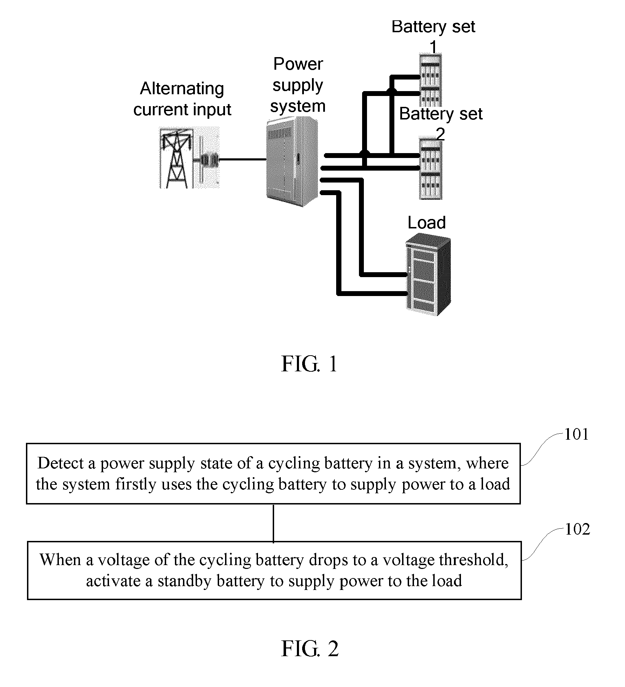

In order to avoid the foregoing technical defects, and in consideration of the cost and the power backup time, during the actual reengineering of the base stations, the prior art tries to keep the original old battery sets and connects the new battery sets with the old battery sets in parallel for use. As shown in FIG. 1, FIG. 1 is a schematic diagram of an implementation of the prior art, the implementation mainly includes an alternating current input, a power supply system, battery sets, and a load; different devices may be connected to the load according to the needs; and the battery sets is formed by an old battery set 1 and a new battery set 2 which are connected in parallel.

However, during the research, it has been found that the prior art has the following disadvantages:
The internal resistance of batteries varies greatly depending on the manufacturers, the degree of usage, the types, and the specifications of the batteries, and the discharging characteristics are also different. If new and old batteries are directly connected in parallel for use, a significant bias current is generated, and even a new battery with long life may be affected, which greatly reduces the cycle life of a battery; and even worse, a battery set is over-charged or over-discharged, and as a result, the battery is inflated and broken, a serious safety hazard may occur.

### SUMMARY OF THE INVENTION

In view of the disadvantages of the prior art, the present invention provides a method, a device, and a system for supplying power from batteries, which can implement mixed use of different types of batteries.

According to the first aspect of the present invention a method for supplying power from batteries includes:
detecting a power supply state of a cycling battery in a system, where the system firstly uses the cycling battery to supply power to a load; and
activating a standby battery to supply power to the load, when a voltage of the cycling battery drops to a voltage threshold.

According to the second aspect of the present invention a device for supplying power from batteries includes:
a detecting unit, configured to detect a power supply state of a cycling battery in a system, where the system firstly uses the cycling battery to supply power to a load; and
a controlling unit, configured to activate a standby battery to supply power to the load, when a voltage of the cycling battery drops to a voltage threshold.

According to the third aspect of the present invention a system for supplying power from batteries includes a power supply system, a load, a cycling battery, a standby battery, and the foregoing device for supplying power from batteries, where:
the power supply system is configured to supply power to the load by using external alternating current, and charge the cycling battery and the standby battery by using the external alternating current via the device for supplying power from batteries; and
the cycling battery and the standby battery are configured to supply power to the load via the device for supplying power from batteries, when the external alternating current is abnormal.

As compared with the prior art, technical solutions of the present invention have the following advantages:
The present invention utilizes the characteristics of deep cycle and long life of the cycling battery; firstly, the cycling battery is used to supply power to the load, and by setting a voltage threshold, the standby battery is activated to supply power to the load when the voltage of the cycling battery drops to the voltage threshold. Therefore, cycling batteries and standby batteries of different types and with different discharging characteristics can be used in parallel, old standby batteries can be reused, the utilization of the standby batteries can be improved, the life of the standby batteries can be extended, and the replacement frequency of the standby batteries can be reduced.

Meanwhile, the parallel use of the cycling batteries and the standby batteries of different types and with different discharging characteristics can solve the defect of insufficient capacity of the standby batteries and improve the power backup time and reliability of the system.

### BRIEF DESCRIPTION OF THE DRAWINGS

To make the technical solutions of the present invention clearer, the accompanying drawings used in the description of the embodiments or the prior art are briefly described in the following. Evidently, the accompanying drawings illustrate only some exemplary embodiments of the present invention.
FIG. 1 is a schematic diagram of power supply using new and old battery sets in the prior art;
FIG. 2 is a flowchart of a method for supplying power from batteries according to an embodiment of the present invention;
FIG. 3 is a flowchart of another method for supplying power from batteries according to an embodiment of the present invention;
FIG. 4 is a schematic structural diagram of a device for supplying power from batteries according to an embodiment of the present invention;
FIG. 5 is a schematic structural diagram of a first controlling unit;
FIG. 6 is a schematic structural diagram of a second controlling unit;
FIG. 7 is a schematic structural diagram of a system for supplying power from batteries according to an embodiment of the present invention;
FIG. 8 is a schematic structural diagram of an implementation of the system for supplying power from batteries according to an embodiment of the present invention; and
FIG. 9 is a schematic structural diagram of another implementation of the system for supplying power from batteries according to an embodiment of the present invention.

### DETAILED DESCRIPTION OF THE EMBODIMENTS

The technical solutions of the embodiments of the present invention are hereinafter described clearly and completely with reference to the accompanying drawings in the embodiments of the present invention. It is evident that the described embodiments are only some exemplary embodiments of the present invention, rather than all embodiments of the present invention.

According to the technical solutions of the embodiments of the present invention, by utilizing the characteristics of deep cycle and long life of a cycling battery and the power backup characteristic of insufficient capacity of a standby battery, the cycling battery and the standby battery of different types and with different discharging characteristics are used in parallel, so that the utilization of the standby battery is improved. Firstly, a method for supplying power from batteries according to an embodiment of the present invention is described hereinafter. Referring to FIG. 2, FIG. 2 is a schematic flowchart of the method, the method may include the following steps:
Step 101: A power supply state of a cycling battery in a system is detected, where the system firstly uses the cycling battery to supply power to a load.
Step 102: When a voltage of the cycling battery drops to a voltage threshold, a standby battery is activated to supply power to the load.

The embodiment of the present invention effectively utilizes the characteristics of deep cycle and long life of the cycling battery; by setting the voltage threshold, the load is powered by the cycling battery on a long-time basis, and the standby battery is activated to supply power to the load only when the voltage of the cycling battery drops to the voltage threshold, so that the standby battery with small capacity can support the power backup of the load. Therefore, the cycling battery and the standby battery can take their respective advantages, an old standby battery can be reused, the life of a standby battery set can be extended, the number of times of replacement of the standby battery can be reduced, the investment in reengineering power supply systems for base stations can be decreased, and possible environment pollution can be reduced. In addition, the parallel use of the cycling battery and the standby battery can solve the current defect of insufficient capacity of the standby battery and the insufficient power backup time of the base stations, improve the reliability of the power supply systems for the base stations, and ensure the smoothness of communication lines.

It should be noted that in the embodiment of the present invention, the standby battery generally has a low power storage and short cycle life, for example, a valve-controlled lead acid battery; and the cycling battery generally has a high power storage and long cycle life, for example, a lithium iron phosphate battery or a flooded battery. Conventional power supply systems for the base stations generally use standby batteries with a low power storage and short cycle life.

In the embodiment of the present invention, activating the standby battery to supply power to the load is subject to a condition that the voltage of the cycling battery drops to the voltage threshold, and this implementation process may include two specific implementations:
One implementation is that when the voltage of the cycling battery drops to a level that is the same as the voltage of the standby battery, the cycling battery and the standby battery are connected in parallel to supply power to the load. In this implementation, the current voltage of the standby battery that is not connected to a power supply system is directly used as the voltage threshold of the cycling battery, and when the voltage of the cycling battery drops to a level that is the same as the voltage of the standby battery, the standby battery and the cycling battery are used to supply power to the load after the standby battery and the cycling battery are connected in parallel.

Another implementation is that when the voltage of the cycling battery drops to a preset voltage value, supplying power to the load by the cycling battery is stopped, and the standby battery is used to supply power to the load. In this implementation, when the voltage of the cycling battery drops to the preset voltage value, the standby battery is used to independently supply power to the load, and this implementation is applicable to an application scenario where a standby battery is used to supply short-time backup power to a load.

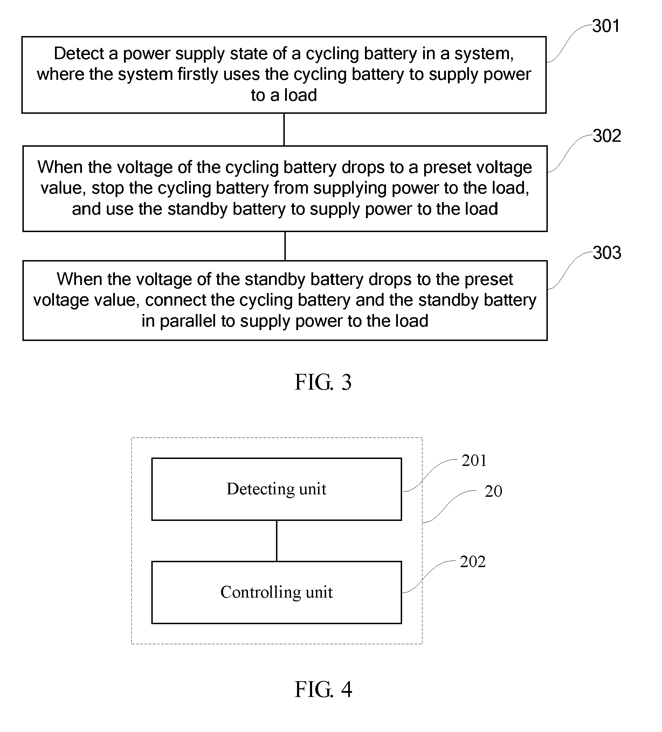

For the foregoing second implementation, an embodiment of the present invention provides another method for supplying power from batteries. As shown in FIG. 3, the method includes:
Step 301: A power supply state of a cycling battery in a system is detected, where the system firstly uses the cycling battery to supply power to a load.
Step 302: When the voltage of the cycling battery drops to a preset voltage value, supplying power to the load by the cycling battery is stopped, and the standby battery is used to supply power to the load.
Step 303: When the voltage of the standby battery drops to the preset voltage value, the cycling battery and the standby battery are connected in parallel to supply power to the load.

In this embodiment of the present invention, a uniform voltage value is preset for the cycling battery and the standby battery; firstly, the cycling battery is used to supply power to the load, and when the voltage of the independent cycling battery drops to the preset voltage value, the standby battery is activated to independently supply power to the load; the cycling battery is connected to the power supply system again and connected with the standby battery in parallel to jointly supply power to the load only when the voltage of the standby battery also drops to the preset voltage value. Therefore, the standby battery can be fully utilized.

The technical solutions of the foregoing embodiment describe an application scenario where the cycling battery and the standby battery supply power to the load when external alternating current is abnormal. When the external alternating current is normal, the external alternating current supplies power to the load generally, and meanwhile, the cycling battery and the standby battery use the external alternating current for charging. During the charging, the cycling battery is first charged generally, and after the charging of the cycling battery is completed, the standby battery is charged, so as to ensure that when batteries are used to maintain power supply to the load, the load is powered by the cycling battery on a long-time basis, while the standby battery with small capacity supports the power backup of the load.

The technical solutions of the embodiments of the present are hereinafter described clearly and completely with reference to the accompanying drawings in the embodiments of the present invention.

To facilitate further understanding of the foregoing method for supplying power from batteries, the present invention is hereinafter described in detail with reference to a specific implementation of a device for supplying power from batteries according to an embodiment of the present invention. As shown in FIG. 4, a device 20 for supplying power from batteries includes:
a detecting unit 201, configured to detect a power supply state of a cycling battery in a system, where the system firstly uses the cycling battery to supply power to a load; and
a controlling unit 202, configured to activate a standby battery to supply power to the load, when a voltage of the cycling battery drops to a voltage threshold.

The embodiment of the present invention effectively utilizes the characteristics of deep cycle and long life of the cycling battery; when external alternating current cannot supply power to the load, firstly the cycling battery supplies power to the load, that is, the load is powered by the cycling battery on a long-time basis; and the standby battery is activated to supply power to the load only when the voltage of the cycling battery drops to the voltage threshold. It can be seen that the device for supplying power from batteries uses the standby battery with small capacity to support the power backup of the load. Therefore, the cycling battery and the standby battery can take their respective advantages, an old standby battery can be reused, the life of a standby battery set can be extended, the number of times of replacement of the standby battery can be reduced, the investment in reengineering power supply systems for base stations can be decreased, and possible environment pollution can be reduced. In addition, the parallel use of the cycling battery and the standby battery can solve the current defect of insufficient capacity of the standby battery and the insufficient power backup time of the base stations, improve the reliability of the power supply systems for the base stations, and ensure the smoothness of communication lines.

It should be noted that according to the technical solutions of the embodiment of the present invention, the controlling unit includes:
a first controlling unit, configured to connect the cycling battery and the standby battery in parallel to supply power to the load, when the voltage of the cycling battery drops to a level that is the same as the voltage of the standby battery; and
a second controlling unit, configured to stop the cycling battery from supplying power to the load and use the standby battery to supply power to the load, when the voltage of the cycling battery drops to a preset voltage value.

It can be seen that the controlling unit according to the embodiment of the present invention provides two ways for batteries to supply power.

In another preferred technical solution of the embodiment of the present invention, the second controlling unit is further configured to connect the cycling battery and the standby battery in parallel to supply power to the load, when the voltage of the standby battery drops to the preset voltage value.

When external alternating current is abnormal, the cycling battery and the standby battery may be used to supply power to the load via the device for supplying power from batteries. When the external alternating current is normal, the external alternating current supplies power to the load generally, and meanwhile, the cycling battery and the standby battery use the external alternating current for charging. Therefore, the controlling unit is further configured to control the alternating current to firstly charge the cycling battery during the charging of the cycling battery and the standby battery by using the external alternating current, and after the charging of the cycling battery is completed, control the alternating current to charge the standby battery, so as to ensure that when batteries are used to maintain power supply to the load, the load is powered by the cycling battery on a long-time basis, while the standby battery with small capacity supports the power backup of the load.

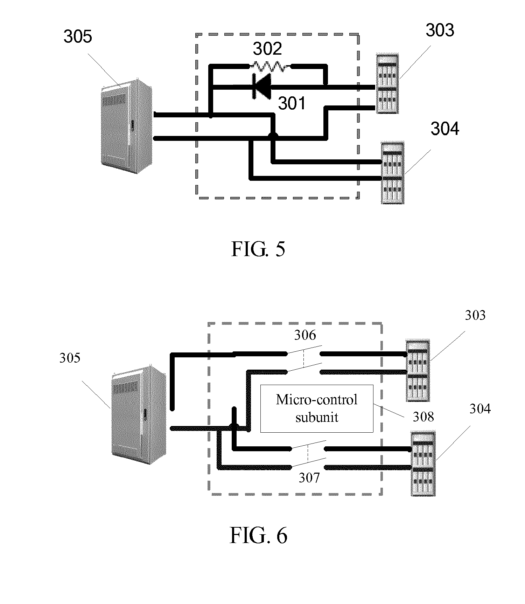

When persons skilled in the art implement the technical solutions of the present invention, the following implementation may be used for the first controlling unit:
As shown in FIG. 5, the first controlling unit may include: a diode 301 and a resistor 302 that is connected with both ends of the diode 301 in parallel. The positive electrode of the diode 301 is connected to the positive electrode of a standby battery 303; the negative electrode of the diode 301 is connected to the positive electrode of a cycling battery 304 and is connected to the output positive electrode of a power supply system 305; and the power supply system 305 is configured to directly use external alternating current to supply power to a load and use the external alternating current to charge the cycling battery and the standby battery, when the external alternating current is normal.

The resistor 302 is configured to limit charging current that is from external alternating current and is used to charge the standby battery 303.

The diode 301 is configured to control the cycling battery 304 to discharge ahead of the standby battery 303; and control the standby battery 303 and the cycling battery 304 to discharge simultaneously, when the voltage of the cycling battery 304 drops to a level that is the same as the voltage of the standby battery 303.

When the input of the external alternating current is normal and the load is powered by the external alternating current, the power supply system directly charges the cycling battery, while the standby battery is charged by a current-limiting resistor R1, so as to ensure that primary current charges the cycling battery while secondary current charges the standby battery.

When the input of the external alternating current is abnormal, the load is powered by the cycling battery and the standby battery, and according to the inversion characteristics of the diode and different voltage plateaus of the cycling battery and the standby battery, the cycling battery generally discharges preferentially. At this time, the cycling battery with a high voltage plateau may not charge the standby battery with a low voltage plateau, so as to avoid bias current; the standby battery is temporarily disconnected and does not discharge; when the voltage of the cycling battery drops to a level that is the same as the voltage of the standby battery, the standby battery starts to discharge, and the standby battery and the cycling battery are connected in parallel to jointly supply power to the load. In this way, the characteristics of large capacity, high discharge rate, and long cycle life of the cycling battery can be fully utilized, the standby battery with small capacity can be configured to support the power backup of the load, and the long-time power backup of the load is supported by the cycling battery. It can be seen that the embodiment of the present invention provides a feasible way for implementing the reuse of the standby battery in a simple and convenient manner.

In an implementation of the second controlling unit, as shown in FIG. 6, the second controlling unit may include: a first switch device 306 that is disposed between the standby battery 303 and the power supply system 305, a second switch device 307 that is disposed between the cycling battery 304 and the power supply system 305, and a micro-control subunit 308.

The micro-control subunit 308 is configured to output a connection or disconnection control signal to the first switch device 306 and the second switch device 307.

The first switch device 306 is configured to implement a connection or disconnection state between the standby battery 303 and the power supply system 305 according to the connection or disconnection control signal.

The second switch device 307 is configured to implement a connection or disconnection state between the cycling battery 304 and the power supply system 305 according to the connection or disconnection control signal.

When the input of the alternating current is normal, the micro-control subunit 308 outputs a connection control signal to the second switch device 307 to implement the connection between the cycling battery 304 and the power supply system 305, and outputs a disconnection control signal to the first switch device 306 to implement the disconnection between the standby battery 303 and the power supply system. When the cycling battery 304 is connected with the power supply system 305, the cycling battery 304 uses the external alternating current for charging; after the charging of the cycling battery is completed, the micro-control subunit 308 outputs a disconnection control signal to the second switch device 307 and outputs a connection control signal to the first switch device 306 to implement the connection between the standby battery 303 and the power supply system 305, the standby battery 303 uses the external alternating current for charging, and after the charging of the standby battery 303 is completed, the micro-control subunit 308 outputs a disconnection control signal to the first switch device 306.

It can be seen that the micro-control subunit 308 can be used to control the external alternating current to firstly charge the cycling battery; and after the charging of the cycling battery is completed, control the alternating current to charge the standby battery, so as to ensure that when batteries are used to maintain power supply to the load, the load is powered by the cycling battery on a long-time basis, while the standby battery with small capacity supports the power backup of the load.

In addition, when the input of the external alternating current is abnormal and cannot supply power to the load, the micro-control subunit 308 controls the cycling battery 304 and the standby battery 303 to supply power to the load. The specific implementation is as follows: The micro-control subunit 308 firstly outputs a connection control signal to the second switch device 307 to implement a connection between the cycling battery 304 and the power supply system 305, then the cycling battery 304 supplies power to the load firstly, and the detecting unit 201 simultaneously detects a power supply state of the cycling battery 304; when the voltage of the cycling battery 304 drops to a preset voltage value, the micro-control subunit 308 outputs a disconnection control signal to the second switch device 307 to stop the cycling battery 304 from supplying power to the load; meanwhile, the micro-control subunit 308 outputs a connection control signal to the first switch device 306 to implement a connection between the standby battery 303 and the power supply system 305, then the standby battery 303 supplies power to the load, and the detecting unit 201 simultaneously detects a power supply state of the standby battery 303; when the voltage of the standby battery 303 drops to the preset voltage value, the micro-control subunit 308 outputs a connection control signal to the second switch device 307 again to implement a connection between the cycling battery 304 and the power supply system 305, so that the cycling battery 304 and the standby battery 303 are connected in parallel to supply power to the load.

The specific implementation of the first switch device 306 and the second switch device 307 may be set selectively according to an application scenario, for example, set to a triode and a MOS transistor, so as to implement the connection or disconnection between the power supply system 305 and each battery. The present invention imposes no specific limitation thereon.

In this way, a solution to parallel use of batteries of different types, with different specifications and different degrees of usage, is implemented, so that the cycling battery and the standby battery can take their respective advantages, an old standby battery can be reused, the life of a standby battery set can be extended, the number of times of replacement of the standby battery can be reduced, the investment in reengineering power supply systems for base stations can be decreased, and possible environment pollution can be reduced. In addition, the parallel use of the cycling battery and the standby battery can solve the current defect of insufficient capacity of the standby battery and the insufficient power backup time of the base stations, improve the reliability of the power supply systems for the base stations, and ensure the smoothness of communication lines.

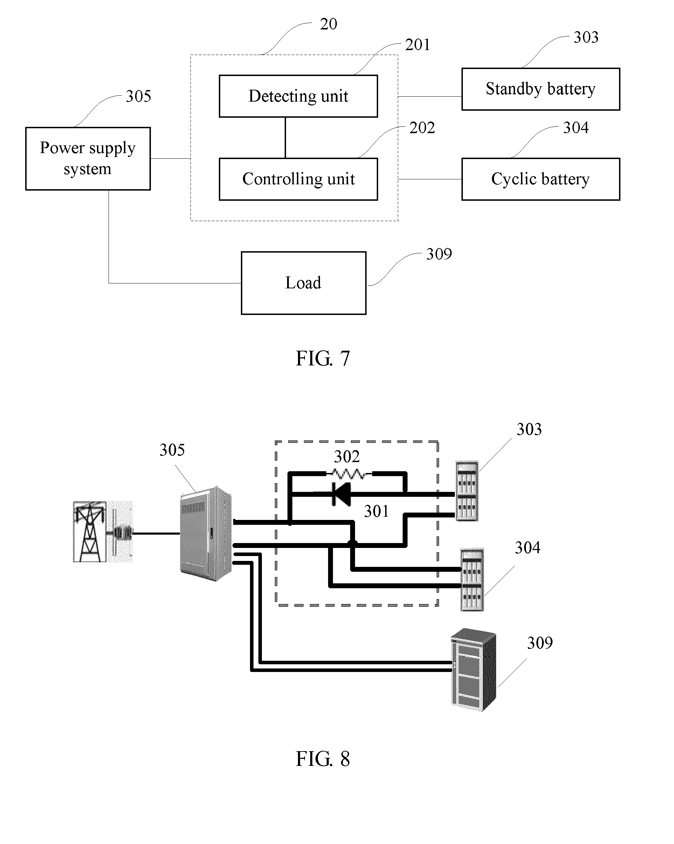

Corresponding to the foregoing device for supplying power from batteries, an embodiment of the present invention further provides a system for supplying power from batteries. As shown in FIG. 7, the system may include: a power supply system 305, a load 309, a cycling battery 304, a standby battery 303, and a device 20 for supplying power from batteries, where the power supply system 305 is configured to supply power to the load 309 by using external alternating current, and use the external alternating current to charge the cycling battery 304 and the standby battery 303 via the device 20 for supplying power from batteries; the cycling battery 304 and the standby battery 303 are configured to supply power to the load 309 via the device for supplying power from batteries when the external alternating current is abnormal; the device 20 for supplying power from batteries includes:
a detecting unit 201, configured to detect a power supply state of the cycling battery 304 in a system, where the system firstly uses the cycling battery 304 to supply power to the load 309; and
a controlling unit 202, configured to activate the standby battery 303 to supply power to the load 309, when the voltage of the cycling battery 304 drops to a voltage threshold.

The embodiment of the present invention utilizes the characteristics of deep cycle and long life of the cycling battery; the load is powered by the cycling battery on a long-time basis, and the standby battery with small capacity supports the power backup of the load. Therefore, the cycling battery and the standby battery can take their respective advantages, an old standby battery can be reused, the life of a standby battery set can be extended, the number of times of replacement of the standby battery can be reduced, the investment in reengineering power supply systems for base stations can be decreased, and possible environment pollution can be reduced. In addition, the parallel use of the cycling battery and the standby battery can solve the current defect of insufficient capacity of the standby battery and insufficient power backup time of the base stations, improve the reliability of the power supply systems for the base stations, and ensure the smoothness of communication lines.

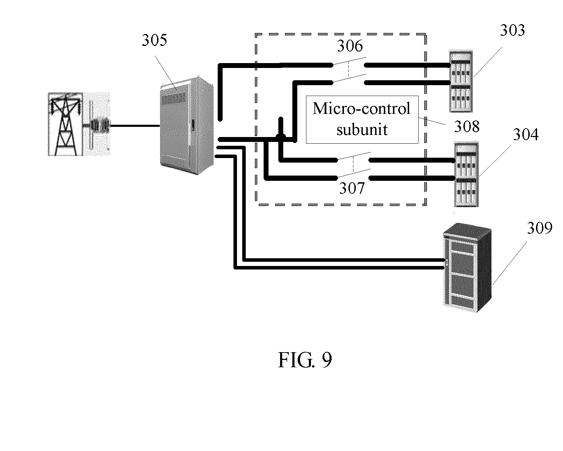

FIG. 8 and FIG. 9 are respectively two specific embodiments of the system for supplying power from batteries. As shown in FIG. 8, the specific implementation of the device 20 for supplying power from batteries includes: a diode 301 and a resistor 302 that is connected with both ends of the diode 301 in parallel. The positive electrode of the diode 301 is connected to the positive electrode of the standby battery 303; and the negative electrode of the diode 301 is connected to the positive electrode of the cycling battery 304, and is connected to the output positive electrode of the power supply system 305.

The resistor 302 is configured to limit charging current that is from external alternating current and is used to charge the standby battery 303.

The diode 301 is configured to control the cycling battery 304 to discharge ahead of the standby battery 303; and control the standby battery 303 and the cycling battery 304 to discharge simultaneously, when the voltage of the cycling battery 304 drops to a level that is the same as the voltage of the standby battery 303.

As shown in FIG. 9, the specific implementation of the device 20 for supplying power from batteries includes: a first switch device 306 that is disposed between a standby battery 303 and a power supply system 305, a second switch device 307 that is disposed between a cycling battery 304 and the power supply system 305, and a micro-control subunit 308. The micro-control subunit 308 is configured to output a connection or disconnection control signal to the first switch device 306 and the second switch device 307; the first switch device 306 is configured to implement a connection or disconnection state between the standby battery 303 and the power supply system 305 according to the connection or disconnection control signal; and the second switch device 307 is configured to implement a connection or disconnection state between the cycling battery 304 and the power supply system 305 according to the connection or disconnection control signal.

The specific implementation of the first switch device 306 and the second switch device 307 may be set selectively according to an application scenario, for example, set to a triode and a MOS transistor, so as to implement the connection or disconnection between the power supply system 305 and each battery. The present invention imposes no specific limitation thereon.

The specific operation principle of the device for supplying power from batteries in FIG. 8 and FIG. 9 has been correspondingly described above, and therefore the embodiment of the present invention will not provide repeated description herein again.

With the system for supplying power from batteries according to the embodiment of the present invention, when the input of the external alternating current is normal, the external alternating current can be controlled to firstly charge the cycling battery, and after the charging of the cycling battery is completed, the alternating current is controlled to charge the standby battery.

Meanwhile, during the charging of the cycling battery and the standby battery by using the external alternating current, the alternating current can be controlled to firstly charge the cycling battery, and after the charging of the cycling battery is completed, the alternating current can be controlled to charge the standby battery, so as to ensure that when batteries are used to maintain power supply to the load, the load is powered by the cycling battery on a long-time basis, while the standby battery with small capacity supports the power backup of the load.

In addition, in all the foregoing embodiments, the cycling battery includes a lithium iron phosphate battery or a flooded battery, and the standby battery includes a valve-controlled lead acid battery.

Persons of ordinary skill in the art may understand that all or part of steps in the above method embodiments may be implemented by program instructing relevant hardware. The program may be stored in a computer readable storage medium, and when the program runs, the steps of the above method embodiments are included; and the foregoing storage medium may be any medium capable of storing program codes, such as a ROM, a RAM, a magnetic disk, and a CD-ROM.

The device for supplying power from batteries in the foregoing embodiments of the present invention may be implemented by software, hardware, or a combination of the software and the hardware, and the embodiments of the present invention impose no specific limitation thereon.

Because the method and system embodiments basically correspond to the device embodiments, the description of the method and system embodiments is simple, and reference can be made to the description of the device embodiments for relevant parts. The device embodiments described above are exemplary only, and the modules described in the embodiments as discrete components may or may not be physically separated, and the components shown as modules may or may not be physical modules, that is, may be located at a place or may be distributed on multiple network modules. Part or all of the modules may be selected according to actual requirements to implement objectives of the solutions of the embodiments. Persons of ordinary skill in the art may understand and implement the embodiments without creative efforts.

The above description of the disclosed embodiments enables those skilled in the art to make or use the present invention. Various modifications to the embodiments will be readily apparent to those skilled in the art, and the general principle defined herein may be applied to other embodiments.

## Claims

1. A method for supplying power from batteries, comprising:
detecting (101) a power supply state of a cycling battery in a system, wherein the system firstly uses the cycling battery to supply power to a load; and
activating (102) a standby battery to supply power to the load when a voltage of the cycling battery drops to a voltage threshold.

2. The method for supplying power from batteries according to claim 1, wherein the step of activating the standby battery to supply power to the load when the voltage of the cycling battery drops to the voltage threshold comprises:
connecting the cycling battery and the standby battery in parallel to supply power to the load, when the voltage of the cycling battery drops to a level that is the same as a voltage of the standby battery.

3. The method for supplying power from batteries according to claim 1, wherein the step of activating the standby battery to supply power to the load when the voltage of the cycling battery drops to the voltage threshold comprises:
stopping the cycling battery from supplying power to the load, and using the standby battery to supply power to the load , when the voltage of the cycling battery drops to a preset voltage value.

4. The method for supplying power from batteries according to claim 3, further comprising:
when the voltage of the standby battery drops to the preset voltage value, connecting the cycling battery and the standby battery in parallel to supply power to the load.

5. The method for supplying power from batteries according to any one of claims 1 to 4, wherein when using external alternating current to supply power to the load, the method further comprises:
using the alternating current to firstly charge the cycling battery; and
after the charging of the cycling battery is completed, using the alternating current to charge the standby battery.

6. A device for supplying power from batteries, comprising:
a detecting unit (201), configured to detect a power supply state of a cycling battery in a system, wherein the system firstly uses the cycling battery to supply power to a load; and
a controlling unit (202), configured to activate a standby battery to supply power to the load when a voltage of the cycling battery drops to a voltage threshold.

7. The device for supplying power from batteries according to claim 6, wherein the controlling unit comprises:
a first controlling unit, configured to connect the cycling battery and the standby battery in parallel to supply power to the load when the voltage of the cycling battery drops to a level that is the same as a voltage of the standby battery; and
a second controlling unit, configured to stop the cycling battery from supplying power to the load, and use the standby battery to supply power to the load, when the voltage of the cycling battery drops to a preset voltage value.

8. The device for supplying power from batteries according to claim 7, wherein the second controlling unit is further configured to:
connect the cycling battery and the standby battery in parallel to supply power to the load, when the voltage of the standby battery drops to the preset voltage value.

9. The device for supplying power from batteries according to claim 7, wherein the first controlling unit comprises: a diode (301) and a resistor (302) that is connected with both ends of the diode in parallel;
wherein a positive electrode of the diode (301) is connected to a positive electrode of the standby battery; and a negative electrode of the diode is connected to a positive electrode of the cycling battery and is connected to an output positive electrode of a power supply system;
the resistor (302) is configured to limit charging current that is from external alternating current and is used to charge the standby battery; and
the diode (301) is configured to control the cycling battery to discharge ahead of the standby battery; and control the standby battery and the cycling battery to discharge simultaneously when the voltage of the cycling battery drops to a level that is the same as the voltage of the standby battery.

10. The device for supplying power from batteries according to claim 7, wherein the second controlling unit comprises: a first switch device that is disposed between the standby battery and a power supply system, a second switch device that is disposed between the cycling battery and the power supply system, and a micro-control subunit;
wherein the micro-control subunit is configured to output a connection or disconnection control signal to the first switch device and the second switch device;
the first switch device is configured to implement a connection or disconnection state between the standby battery and the power supply system according to the connection or disconnection control signal; and
the second switch device is configured to implement a connection or disconnection state between the cycling battery and the power supply system according to the connection or disconnection control signal.

11. The device for supplying power from batteries according to any one of claims 6 to 10, wherein the cycling battery comprises: a lithium iron phosphate battery or a flooded battery.

12. The device for supplying power from batteries according to any one of claims 6 to 10, wherein the standby battery comprises: a valve-controlled lead acid battery.

13. A system for supplying power from batteries, comprising: a power supply system (305), a load (309), a cycling battery (304), a standby battery (303), and the device (20) for supplying power from batteries according to any one of claims 6 to 12, wherein:
the power supply system (305) is configured to supply power to the load by using external alternating current, and charge the cycling battery and the standby battery by using the external alternating current via the device for supplying power from batteries; and
the cycling battery (304) and the standby battery (303) are configured to supply power to the load via the device for supplying power from batteries when the external alternating current is abnormal.
